(19) Europäisches Patentamt
European Patent Office
Office européen des brevets

(11) **EP 1 943 291 B1**

(12) **EUROPEAN PATENT SPECIFICATION**

(45) Date of publication and mention
of the grant of the patent:
**11.12.2013 Bulletin 2013/50**

(21) Application number: **06816456.5**

(22) Date of filing: **06.10.2006**

(51) Int Cl.:
*C08G 69/26* (2006.01)      *C08G 69/36* (2006.01)

(86) International application number:
**PCT/US2006/039238**

(87) International publication number:
**WO 2007/044573 (19.04.2007 Gazette 2007/16)**

(54) **HYDROLYSIS RESISTANT POLYAMIDE COMPOSITIONS, AND ARTICLES FORMED THEREFROM**

HYDROLYSEBESTÄNDIGE POLYAMIDZUSAMMENSETZUNGEN UND DARAUS GEBILDETE GEGENSTÄNDE

COMPOSITIONS A BASE DE POLYAMIDE RESISTANTES A L'HYDROLYSE, ET ARTICLES FABRIQUES A PARTIR DE CELLES-CI

(84) Designated Contracting States:
**DE FR**

(30) Priority: **06.10.2005 US 724014 P**

(43) Date of publication of application:
**16.07.2008 Bulletin 2008/29**

(73) Proprietor: **E.I. DU PONT DE NEMOURS AND COMPANY**
**Wilmington, DE 19898 (US)**

(72) Inventors:
 • **FISH, Robert, B., Jr.**
 **Parkersburg, WV 25101 (US)**
 • **MARTENS, Marvin, M.**
 **Vienna, WV 25104 (US)**
 • **MESTEMACHER, Steven, A.**
 **Parkersburg, WV 26104 (US)**
 • **PAGILAGAN, Rolando, Umali**
 **Parkersburg, WV 26104 (US)**

(74) Representative: **Morf, Jan Stefan et al**
**Abitz & Partner**
**Patentanwälte**
**Postfach 86 01 09**
**81628 München (DE)**

(56) References cited:
**EP-A2- 0 407 870      WO-A-93/01108**
**US-A- 1 558 800      US-A- 4 603 166**
**US-B1- 6 191 207**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to hydrolysis resistant polyamide compositions having good flexibility and articles made therefrom. The polyamide compositions comprise copolyamide having a melting point that is less than or equal to about 240 °C, at least 30 μeq/g of amine ends, and an inherent viscosity of at least about 1.2.

### Background of the Invention

Due to their good physical properties and chemical resistance, various polyamides find many applications as engineering polymers. Such applications often require that the polyamide be in contact with water, and many applications require elevated temperatures. Examples include an undersea oil pipe that comes into contact with hot oil from the earth's interior and automobile radiator tubing. Under such conditions, the amide bonds of many polyamides may be susceptible to hydrolysis in the presence of water and the rate of hydrolysis increases with temperature. Hydrolysis of the amide bonds can cause a reduction in molecular weight and concomitant loss in physical properties that can result in failure of the pipe during use. Such a failure can be catastrophic, with the loss of fluid causing undesirable consequences ranging from the impairment of the performance of the device within which the piping is incorporated, to contact of the fluid with the surrounding environment.

Aliphatic polyamides such as polyamide 6,12 or polyamide 11 have been used to make pipes and other tubular structures, but many applications require greater hydrolysis resistance than can be obtained from currently available polyamides.

US 4,603,166 A discloses polyamide compositions consisting of aromatic and aliphatic dicarboxylic acids and aliphatic diamines having high heat deflection temperatures including dates on their inherent viscosity, measured in a solvent mixture (tetrachloroethane/phenol). However, this publication does neither suggest nor mention the inherent viscosity value (measured in m-cresol as solvent) or the amine ends content as feature for high resistance against hydrolysis.

It would be desirable to obtain a polyamide having both good hydrolysis resistance and that could be conveniently plasticized to be useful in manufacturing pipes and other extruded articles.

### Summary of the Invention

There is disclosed and claimed herein polyamide compositions comprising a copolyamide comprising:

(a) repeat units derived from monomers selected from one or more of the group consisting of:

(i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and
(ii) at least one aromatic diamine having 6 to 20 carbon atoms and/or at least one alicyclic diamine having 6 to 20 carbon atoms and at least one aliphatic dicarboxylic acid having 4 to 20 carbon atoms; and

(b) repeat units derived from monomers selected from one or more of the group consisting of:

(iii) at least one aliphatic dicarboxylic acid having 6 to 36 carbon atoms and at least one aliphatic diamine having 4 to 20 carbon atoms, and
(iv) at least one lactam and/or aminocarboxylic acid having 4 to 20 carbon atoms;

wherein the copolyamide has a melting point that is less than or equal to about 240 °C, at least 30 μeq/g of amine ends, and an inherent viscosity of at least about 1.2 as measured in *m*-cresol.

There is further disclosed and claimed herein articles of manufacture made from the composition.

### Detailed Description of the Invention

There are a number of terms used throughout the specification for which the following will be of assistance in understanding their scope and meaning. As used herein and as will be understood by those skilled in the art, the terms "terephthalic acid," "isophthalic acid," and "dicarboxylic acid/dioic acid" refer also to the corresponding carboxylic acid derivatives of these materials, which can include carboxylic acid esters, diesters, and acid chlorides. Moreover and as used herein, and as will be understood by one skilled in the art, the term "hydrolysis resistant" in conjunction with a polyamide refers to the ability of the polyamide to retain its molecular weight upon exposure to water. The term "copolyamide" refers to polyamides having two or more different repeat units.

The polyamide composition of the present invention comprises a copolyamide comprising repeat units (a) that are derived from monomers selected from the group consisting of (i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and (ii) at least one aromatic diamine having 6 to 20 carbon atoms and/or at least alicyclic diamine having 6 to 20 carbon atoms and at least one aliphatic dicarboxylic acid having 4 to 20 carbon atoms. The copolyamide further comprises repeat units (b) that are derived from monomers selected from one or more of the group consisting of (i) at least one aliphatic dicarboxylic acids having 6 to 36 carbon atoms and at least one aliphatic diamine having 4 to 20 carbon atoms, and (ii) at least one lactam and/or aminocarboxylic acids having 4 to 20 carbon atoms.

By "aromatic dicarboxylic acid" is meant dicarboxylic acids in which each carboxyl group is directly bonded to an aromatic ring. Examples of suitable aromatic dicarboxylic acids include terephthalic acid; isophthalic acid; 1,5-nathphalenedicarboxylic acid; 2,6-nathphalenedicarboxylic acid; and 2,7-nathphalenedicarboxylic acid. Terephthalic acid and isophthalic acid are preferred. By "alicyclic dicarboxylic acid" is meant dicarboxylic acids containing a saturated hydrocarbon ring, such as a cyclohexane ring. The carboxyl group is preferably directly bonded to the saturated hydrocarbon ring. An example of a suitable alicyclic dicarboxylic acid includes 1,4-cyclohexanedicarboylic acid.

By "aromatic diamine" is meant diamines containing an aromatic ring. An example of a suitable aromatic diamine is *m*-xylylenediamine. By "alicyclic diamine" is meant diamines containing a saturated hydrocarbon ring. Examples of suitable alicyclic diamines include 1-amino-3-aminomethyl-3,5,5,-trimethylcyclohexane; 1,4-bis(aminomethyl)cyclohexane; and bis(*p*-aminocyclohexyl)methane. Any of the stereoisomers of the alicyclic diamines may be used.

Examples of aliphatic dicarboxylic acids having 6 to 36 carbon atoms include adipic acid, nonanedioic acid, decanedioic acid (also known as sebacic acid), undecanedioic acid, dodecanedioic acid, tridecanedioic acid, and tetradecanedioic acid. The aliphatic diamines having 4 to 20 carbon atoms may be linear or branched. Examples of preferred diamines include hexamethylenediamine, 2-methylpentamethylenediamine; 1,8-diaminooctane; methyl-1,8-diaminooctane; 1,9-diaminononane; 1,10-diaminodecane; and 1,12-diaminedodecane. Examples of lactams include caprolactam and laurolactam. An example of an aminocarboxylic acid includes aminodecanoic acid.

Preferred copolyamides are semiaromatic copolyamides. The copolyamides preferably comprise repeat units (a) that are derived from terephthalic acid and/or isophthalic acid and hexamethylenediamine and repeats units (b) that are derived from one or more of nonanedioic acid and hexamethylenediamine; decanedioic acid and hexamethylenediamine; undecanedioic acid and hexamethylenediamine; dodecanedioic acid and hexamethylenediamine; tridecanedioic acid and hexamethylenediamine; tetradecanedioic acid and hexamethylenediamine; caprolactam; laurolactam; and 11-aminoundecanoic acid.

A preferred copolyamide comprises repeat units (a) that are derived from terephthalic acid and hexamethylenediamine and repeat units (b) that are derived from decanedioic acid and/or dodecanedioic acid and hexamethylenediamine.

The copolyamide has at least 30 $\mu$eq/g of amine ends, or preferably at least 40, or more preferably at least 50, or yet more preferably at least 60 $\mu$eq/g of amine ends. The amount of amines ends is determined by titration. Amine ends may be determined by titrating a 2 percent solution of polyamide in a phenol/methanol/water mixture (50:25:25 by volume) with 0.1 N hydrochloric acid. The end point may be determined potentiometrically or conductometrically. (See Kohan, M.I. Ed. Nylon Plastics Handbook, Hanser: Munich, 1995; p. 79 and Waltz, J.E.; Taylor, G.B. Anal. Chem. 1947 19, 448-50.)

The copolyamide has an inherent viscosity of at least about 1.2 as measured in *m*-cresol following ASTM D5225.

The copolyamide has melting point of less than or equal to about 240 °C, or preferably less than or equal to about 230 °C, or yet more preferably less than or equal to about 220 °C. By "melting point" is meant the second melting point of the polymer as measured according to ISO 11357 and ASTM D3418.

The copolyamide of the present invention may be prepared by any means known to those skilled in the art, such as in an batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and end-capping agents may be added to the polymerization mixture.

The polyamide composition of the present invention may comprise the copolyamide alone or may optionally comprise additives. A preferred additive is at least one plasticizer. The plasticizer will preferably be miscible with the copolyamide. Examples of suitable plasticizers include sulfonamides, preferably aromatic sulfonamides such as benzenesulfonamides and toluenesulfonamides. Examples of suitable sulfonamides include *N*-alkyl benzenesulfonamides and toluenesufonamides, such as *N*-butylbenzenesulfonamide, *N*-(2-hydroxypropyl)benzenesulfonamide, *N*-ethyl-o-toluenesulfonamide, *N*-ethyl-*p*-toluenesuffonamide, o-toluenesulfonamide and *p*-toluenesulfonamide. Preferred are *N*-butylbenzenesulfonamide, *N*-ethyl-*o*-toluenesulfonamide, and *N*-ethyl-*p*-toluenesulfonamide.

The plasticizer may be incorporated into the composition by melt-blending the polymer with plasticizer and, optionally, other ingredients, or during polymerization. If the plasticizer is incorporated during polymerization, the copolyamide monomers are blended with one or more plasticizers prior to starting the polymerization cycle and the blend is introduced to the polymerization reactor. Alternatively, the plasticizer can be added to the reactor during the polymerization cycle.

When used, the plasticizer will be present in the composition in 1 to 20 weight percent, or more preferably in 6 to 18 weight percent, or yet more preferably in 8 to 15 weight percent, wherein the weight percentages are based on the total weight of the composition.

The polyamide composition may optionally comprise additional additives such as thermal, oxidative, and/or light stabilizers; colorants; lubricants and mold release agents. Such additives can be added in conventional amounts according to the desired properties of the resulting material, and the control of these amounts versus the desired properties is within the knowledge of the skilled artisan.

When present, additives may be incorporated into the polyamide composition of the present invention by melt-blending using any known methods. The component materials may be mixed to homogeneity using a melt-mixer such as a single or twinscrew extruder, blender, kneader or Banbury mixer to give a polyamide composition. Or, part of the materials may be mixed in a melt-mixer, and the rest of the materials may then be added and further melt-mixed until homogeneous.

The polyamide composition of the present invention may be formed into shaped articles using any suitable melt-processing technique, such as injection molding, extrusion, blow molding, injection blow molding or thermoforming.

The polyamide composition of the present invention has good hydrolysis resistance and may be conveniently plasticized. It is particularly suitable for forming articles such as pipes and tubes by extrusion.

### **Examples**

#### Determination of hydrolysis resistance

It is well known in the art that when hydrolyzed, polyamides often lose physical properties. The loss of physical properties is often directly correlated with a decrease in inherent viscosity of the polyamide. The degree of degradation may be conveniently studied by observing the decrease of a polyamide's inherent viscosity over time. Such a method is described in API (American Petroleum Institute) Technical Report 17TR2, June 2003, and is the method upon which the following procedure is based.

Hydrolysis resistance testing was done on compositions molded into standard ISO tensile bars that were immersed in distilled water in a pressure vessel. The water and samples were held under vacuum for 30 minutes and then high-purity argon was bubbled through the water for 30 minutes to remove dissolved oxygen. The vessel was then sealed and placed in a conventional electrical heating mantle. The temperature in the vessel was controlled by use of a thermocouple in a thermowell in the wall of the vessel and was maintained at 105 $\pm$ 1 °C and samples were withdrawn at intervals and their inherent viscosities and plasticizer contents were measured. After each sample was withdrawn, the water was replaced, a new sample was added, and the procedure repeated. The inherent viscosity (IV) and inherent viscosity corrected for plasticizer content (CIV) was then determined for each sample as described below.

#### Inherent viscosity

Inherent viscosity (IV) was measured by dissolving a sample of the polymer in *m*-cresol and measuring the IV in a capillary viscometer following ASTM 2857. Because plasticizer present in the samples could leach out during the hydrolysis testing and hence affect the measured IV, it was necessary to correct for the amount of plasticizer present in each sample.

In order to correct for the amount of plasticizer in each sample, the weight percent plasticizer content was measured by heating samples under vacuum and measuring the weight loss that occurred during heating. The inherent viscosity corrected for plasticizer content (CIV) was calculated by formula (1) (where plasticizer % is the weight percentage plasticizer present in the sample):

$$CIV = \frac{IV}{(100\% - plasticizer\%)} * 100\% \qquad (1)$$

The percent loss of CIV was calculated by formula (2):

$$\%\,CIV\,loss = \frac{CIV(t=x)}{CIV(t=0)}*100\% \qquad (2)$$

where $CIV_{(t=x)}$ is the CIV for the sample taken at time x and $CIV_{(t=0)}$ is the CIV for a sample taken before hydrolysis testing.

The % CIV loss was plotted as a function of $\log_{10}$(time), where time is the amount of time in hours each sample was exposed to water in the pressure vessel at $105 \pm 1$ °C. A linear least squares fit was made to the plot of % CIV loss as a function of $\log_{10}$(time) and a value for % CIV loss at 500 hours was calculated by interpolation from the least squares fit. The results are reported for each example and comparative example below.

Ends analysis

End group analysis was performed by titration of a solution of the polyamide.

The carboxyl end groups (-COOH) of the polymer were determined by dissolving 2.9 to 3.1 grams of sample weighed to an accuracy of 0.0005 g in 75 mL of benzyl alcohol at a temperature of $170 \pm 5$ °C and titrating with 0.05 N NaOH in a 9:1 by volume benzyl alcohol/methanol mixture, using phenolphthalein as the indicator. A blank titration was effected using 75 mL of benzyl alcohol under the same conditions. The net titer is the difference between the sample titer and the blank titer.

The amine end groups (-NH$_2$) were determined by titration. The polymer (2.5 to 3.0 g weighed to an accuracy of 0.0001 g) was dissolved in 90 mL of a solution comprising 85 weight percent phenol and 15 weight percent methanol with gentle stirring and heating. The solution was then titrated potentionmetrically with 0.5 N perchloric acid.

The ends measurements thus calculated were corrected for plasticizer present in the polymer composition by dividing the ends measurement by (1 - the weight fraction of plasticizer present).

Comparative Example 1

Rilsan® Benso P40TL, a polyamide 11 composition containing 11 weight percent of the plasticizer N-butyl benzenesulfonamide and sold commercially by Arkema, Inc. was molding into standard ISO bars. The Rilsan® Benso P40TL had 33.5 $\mu$eq/g of amine ends and 35.3 $\mu$eq/g of acid ends when corrected for plasticizer content. The hydrolysis resistance of the Rilsan® Benso P40TL was determined using the ISO bars. The results are shown in Table 1. The % CIV loss at 500 hours was calculated to be 31.1%

Table 1

| Sample | Exposure time (h) | Plasticizer content (wt. %) | Measured IV | CIV | CIV loss (%) |
|---|---|---|---|---|---|
| 1 | 0 | 12 | 1.52 | 1.73 | 0 |
| 2 | 22 | 9.3 | 1.46 | 1.61 | 7 |
| 3 | 114.5 | 7.1 | 1.31 | 1.41 | 18.2 |
| 4 | 278 | 4.7 | 1.21 | 1.27 | 26.7 |
| 5 | 346.5 | 3.6 | 1.18 | 1.22 | 29.3 |
| 6 | 846.6 | 2.4 | 1.1 | 1.13 | 35 |

Comparative Example 2

2585 kg (5,700 lbs) of a 45 percent by weight of polyamide 6,12 salt solution, prepared from hexamethylenediamine and 1,12-dodecanedioic acid in water, and having a pH of about 8.0 were charged into an evaporator. Then 250 g of a 10 percent by weight solution of a conventional antifoam agent in water was added to the salt solution. The resulting solution in the evaporator was then concentrated to 80 percent by weight in water at 241 kPa (35 psia). The concentrated solution and 218 kg (480 lbs) of N-butyl benzene sulfonamide plasticizer were then charged into an autoclave and heated while the pressure was allowed to rise to 1827 kPa (265 psia). Steam was vented and heating was continued until the temperature of the batch reached 255 °C. The pressure was then reduced slowly to 101 kPa (14.7 psia), while the batch temperature was allowed to further rise to 280 °C. The pressure was then held at 101 kPa (14.7 psia) and the temperature was held at 280 °C for 30 minutes. Finally, the polymer melt was extruded into strands, cooled, cut into pellets, and dried at 160 °C under nitrogen. The resulting polyamide 6,12 is referred to herein as C1.

Dry stabilizer powders were mixed with the C1 resin pellets according to the following recipe: 98.4 weight percent C1 resin pellets, 0.5 weight percent Tinuvin® 234, 0.4 weight percent Irgafos® 168, 0.4 weight percent Irganox® 1098, and 0.3 weight percent Chimassorb® 944. Each stabilizer is available commercially from Ciba Specialty Chemicals, Tarrytown, NY. The components were blended by tumbling in a drum and then the dry ingredient blend was compounded in a molding machine and molded into standard ISO bars.

The resulting compounded C1 blends had 22.1 μeq/g of amine ends and 60.1 μeq/g of acid ends. The hydrolysis resistance of the compounded C1 blends was determined using the ISO bars. The results are shown in Table 2. The % CIV loss at 500 hours was calculated to be 39.8%

Table 2

| Sample | Exposure time (h) | Plasticizer content (wt. %) | Measured IV | CIV | CIV loss (%) |
|--------|-------------------|------------------------------|-------------|------|---------------|
| 1 | 0 | 10.3 | 1.55 | 1.73 | 0 |
| 2 | 20 | 7.6 | 1.55 | 1.68 | 3 |
| 3 | 76 | 6.7 | 1.47 | 1.58 | 8.7 |
| 4 | 238 | 3.6 | 1.16 | 1.20 | 30.5 |
| 5 | 832 | 1.4 | 0.93 | 0.94 | 45.4 |
| 6 | 1153 | 0.8 | 0.88 | 0.89 | 48.8 |

Comparative Example 3

1712.8 g of a 44.56 percent by weight of polyamide 6,12 salt solution, prepared from hexamethylenediamine and 1,12-dodecanedioic acid in water, and having a pH of about 7.7 and 229.3 g of a 40 percent by weight polyamide 6,T salt solution prepared from hexamethylenediamine and terephthalic acid in water, and having a pH of 8.0 ± 0.2 were charged into an autoclave. Then 250 g of a 10 percent by weight solution of a conventional antifoam agent in water, 0.014 g of sodium hypophosphate, and 51.1 g of N-butyl benzenesulfonamide were added to the autoclave. The resulting solution was then concentrated to 80 percent by weight in water at 241 kPa (35 psia). The concentrated solution was then held in the autoclave and heated while the pressure was allowed to rise to 1655 kPa (240 psia). Steam was vented and heating was continued until the temperature of the batch reached 241 °C. The pressure was then reduced slowly to 101 kPa (14.7 psia), while the batch temperature was allowed to further rise to 270 °C. The pressure was then held at 101 kPa (14.7 psia) and the temperature was held at 280 °C for 60 minutes. Finally, the polymer melt was extruded into strands, cooled, cut into pellets, and dried at 160 °C under nitrogen. The resulting plasticized polyamide 6,12/6,T is referred to herein as C2.

Dry stabilizer powders were mixed with the C2 resin pellets according to the following recipe: 98.4 weight percent C2 resin pellets, 0.5 weight percent Tinuvin® 234, 0.4 weight percent Irgafos® 168, 0.4 weight percent Irganox® 1098, and 0.3 weight percent Chimassorb® 944. Each stabilizer is available commercially from Ciba Specialty Chemicals, Tarrytown, NY. The components were blended by tumbling in a drum and then the dry ingredient blend was compounded in a molding machine and molded into standard ISO bars.

The resulting compounded C2 blends had 22.6 μeq/g of amine ends and 126.4 μeq/g of acid ends. The hydrolysis resistance of the compounded C1 blends was determined using the ISO bars. The results are shown in Table 3. The % CIV loss at 500 hours was calculated to be 29.5%

Table 3

| Sample | Exposure time (h) | Plasticizer content (wt. %) | Measured IV | CIV | CIV loss (%) |
|--------|-------------------|------------------------------|-------------|------|---------------|
| 1 | 0 | 5.9 | 1.06 | 1.13 | 0 |
| 2 | 18 | 3.1 | 0.97 | 1.00 | 10.5 |
| 3 | 127 | 1.6 | 0.82 | 0.83 | 25.6 |
| 4 | 361.5 | 1.3 | 0.79 | 0.80 | 28.9 |
| 5 | 839 | 0.3 | 0.78 | 0.78 | 30.2 |

Example 1

95.1kg (209.6 lbs.) of a 40.08 percent by weight of polyamide 6,12/6,T salt solution was prepared from hexamethylenediamine, 1,12-dodecanedioic acid, and terephthalic acid in water, where the molar ratio of 1,2-dodecanedioic acid to terephthalic acid is 85:15. The salt solution had a pH of 9.0 ± 0.2 and was charged into an autoclave with 3.4 g of a 10 percent by weight solution of a conventional antifoam agent in water, 3.4 g of sodium hypophosphate, 8.5 g of sodium bicarbonate, and 20.4 g of glacial acetic acid were added to the autoclave. The solution was then heated while the pressure was allowed to rise to 1827 kPa (265 psia) at which point, steam was vented to maintain the pressure at 1827 kPa (265 psia) and heating was continued until the temperature of the batch reached 245 °C. The pressure was then reduced slowly to 76 kPa (11.0 psia), while the batch temperature was allowed to further rise X to 265-275 °C. The pressure was then held at 76 kPa (11.0 psia) and the temperature was held at 265-275 °C for 10 minutes. Finally, the polymer melt was extruded into  strands, cooled, and cut into pellets. The resulting polyamide 6,12/6,T is referred to herein as E1 and had a melting point of about 191 ± 2 °C.

95.1 kg (209.6 lbs.) of a 40.08 percent by weight of polyamide 6,12/6,T salt solution was prepared from hexamethylenediamine, 1,12-dodecanedioic acid, and terephthalic acid in water, where the molar ratio of 1,2-dodecanedioic acid to terephthalic acid is 85:15. The salt solution had a pH of 9.0 ± 0.2 and was charged into an autoclave with 3.4 g of a 10 percent by weight solution of a conventional antifoam agent in water, 3.4 g of sodium hypophosphate, 8.5 g of sodium bicarbonate, and 117.5 g of *N*-butyl benzenesulfonamide were added to the autoclave. The solution was then heated while the pressure was allowed to rise to 1827 kPa (265 psia) at which point, steam was vented and heating was continued until the temperature of the batch reached 245 °C. The pressure was then reduced slowly to 41 kPa (6.0 psia), while the batch temperature was allowed to further rise to 265-275 °C. The pressure was then held at 41 kPa (6.0 psia) and the temperature was held at 265-275 °C for 25 minutes. Finally, the polymer melt was extruded into strands, cooled, cut into pellets, and dried at 160 °C under nitrogen. The resulting plasticized polyamide 6,12/6,T is referred to herein as E2 and had a melting point of about 186 ± 2°C.

Dry stabilizer powders were mixed with the E1 resin pellets according to the following recipe: 78.4 weight percent E1 resin pellets; 17.2 weight percent Fusabond® MF521 D, an impact modifier comprising a maleic anhydride modified ethylene/propylene/diene polymer (EPDM) (supplied by E.I. du Pont de Nemours & Co., Wilmington, DE); 1.4 weight percent Tinuvin® 234; 1.1 weight percent Irgafos® 168; 1.1 weight percent Irganox® 1098; and 0.9 weight percent Chimassorb® 944. Each stabilizer is available commercially from Ciba Specialty Chemicals, Tarrytown, NY. The components were melt-blended in a 30 mm W&P extruder, quenched under water, and cooled under a nitrogen blanket. This blend is referred to herein as E3.

The E2 (65 weight percent) and E3 (35 weight percent) pellets were dry-blended by tumbling in a drum. The resulting cube blend was molded into standard ISO bars in a molding machine. The resulting E2/E3 melt blends had 64.3 μeq/g of amine ends and 82.5 μeq/g of acid ends. The hydrolysis resistance of the E2/E3 melt blends was determined using the ISO bars. The results are shown in Table 4. The % CIV loss at 500 hours was calculated to be -9.0%

Table 4

| Sample | Exposure time (h) | Plasticizer content (wt. %) | Measured IV | CIV. | CIV loss (%) |
|--------|------------------|-----------------------------|-------------|------|--------------|
| 1 | 0 | 11.5 | 1.31 | 1.48 | 0 |
| 2 | 22 | 8.6 | 1.33 | 1.46 | 2.3 |
| 3 | 114.5 | 6.7 | 1.44 | 1.54 | -4.0 |
| 4 | 278 | 4.3 | 1.52 | 1.59 | -7.0 |
| 5 | 346.5 | 2.9 | 1.55 | 1.6 | -7.5 |

**Claims**

1.   A polyamide composition comprising a copolyamide comprising;

(a) repeat units derived from monomers selected from one or more of the group consisting of:

(i) at least one aromatic dicarboxylic acid having 8 to 20 carbon atoms and/or at least one alicyclic dicarboxylic acid having 8 to 20 carbon atoms and at least one aliphatic diamine having 4 to 20 carbon atoms, and
(ii) at least one aromatic diamine having 6 to 20 carbon atoms and/or at least one alicyclic diamine having 6 to 20 carbon atoms and at least one aliphatic dicarboxylic acid having 4 to 20 carbon atoms, and

(b) repeat units derived from monomers selected from one or more of the group consisting of:

(iii) at least one aliphatic dicarboxylic acid having 6 to 36 carbon atoms and at least one aliphatic diamine having 4 to 20 carbon atoms, and
(iv) at least one lactam and/or aminocarboxylic acid having 4 to 20 carbon atoms;

wherein the copolyamide has a melting point that is less than or equal to about 240 °C, at least 30 $\mu$eq/g of amine ends, and an inherent viscosity of at least about 1.2 as measured in *m*-cresol.

2. The polyamide composition of claim 1 wherein repeat units (b) are derived from decanedioic acid and/or dodecanedioic acid, and hexamethylenediamine.

3. The polyamide composition of claim 1, wherein the aliphatic dicarboxylic acids of monomers (iii) are selected from one or more of nonanedioic acid, decanedioic acid, undecanedioic acid, dodecanedioic acid, tridecanedioic acid, and tetradecanedioic acid, and wherein the aliphatic diamine of (iii) is hexamethylenediamine.

4. The polyamide composition of claim 1 wherein the lactam and/or aminocarboxylic acid is at least one of laurolactam, caprolactam, and 11-aminoundecanoic acid.

5. The polyamide composition of claim 1 wherein the copolyamide is present in 80 to 99 weight percent and further comprising and 1 to 20 weight percent of a plasticizer, wherein the weight percentages are based on the total weight of the composition.

6. The polyamide composition of claim 5 wherein the plasticizer is a sulfonamide.

7. The polyamide composition of claim 5 wherein the plasticizer is one or more of *N*-butylbenzenesulfonamide, *N*-(2-hydroxypropyl)benzenesulfonamide, *N*-ethyl-o-toluenesulfonamide, *N*-ethyl-p-toluenesulfonamide, *o*-toluenesulfonamide, and *p*-toluenesulfonamide.

8. The polyamide composition of claim 1 further comprising one or more of thermal, oxidative, and/or light stabilizers; mold release agents; colorants; and lubricants.

9. The polyamide composition of claim 1, wherein the copolyamide has at least 40 $\mu$eq/g of amine ends.

10. The polyamide composition of claim 1, wherein the copolyamide has at least 50 $\mu$eq/g of amine ends.

11. The polyamide composition of claim 1, wherein the copolyamide has at least 60 $\mu$eq/g of amine ends.

12. The polyamide composition of claim 1, wherein the copolyamide has a melting point of less than or equal to about 230 °C.

13. The polyamide composition of claim 1, wherein the copolyamide has a melting point of less than or equal to about 220 °C.

14. An article comprising the polyamide composition of claim 1.

**Patentansprüche**

1. Polyamidzusammensetzung umfassend ein Copolyamid umfassend:

(a) Wiederholungseinheiten, die von Monomeren abgeleitet sind, die aus einem oder mehreren aus der Gruppe ausgewählt sind, bestehend aus:

(i) mindestens einer aromatischen Dicarbonsäure, die 8 bis 20 Kohlenstoffatome aufweist, und/oder mindestens einer alicyclischen Dicarbonsäure, die 8 is 20 Kohlenstoffatome aufweist, und mindestens einem aliphatischen Diamin, das 4 bis 20 Kohlenstoffatome aufweist, und
(ii) mindestens einem aromatischen Diamin, das 6 bis 20 Kohlenstoffatome aufweist, und/oder mindestens einem alicyclischen Diamin, das 6 bis 20 Kohlenstoffatome aufweist, und mindestens einer aliphatischen Dicarbonsäure, die 4 bis 20 Kohlenstoffatome aufweist, und

(b) Wiederholungseinheiten, die von Monomeren abgeleitet sind, die aus einem oder mehreren aus der Gruppe ausgewählt sind, bestehend aus:

(iii) mindestens einer aliphatischen Dicarbonsäure, die 6 bis 36 Kohlenstoffatome aufweist, und mindestens einem aliphatischen Diamin, das 4 bis 20 Kohlenstoffatome aufweist, und
(iv) mindestens einem Lactam und/oder einer Aminocarbonsäure, die 4 bis 20 Kohlenstoffatome aufweist;

wobei das Copolyamid einen Schmelzpunkt, der niedriger als oder gleich etwa 240 °C ist, mindestens 30 μäquiv./g Aminenden und eine inhärente Viskosität von mindestens etwa 1,2, wie in m-Cresol gemessen, aufweist.

2. Polyamidzusammensetzung nach Anspruch 1, wobei die Wiederholungseinheiten (b) von Decandisäure und/oder Dodecandisäure und Hexamethylendiamin abgeleitet sind.

3. Polyamidzusammensetzung nach Anspruch 1, wobei die aliphatischen Dicarbonsäuren der Monomere (iii) aus einer oder mehreren von Nonandisäure, Decandisäure, Undecandisäure, Dodecandisäure, Tridecandisäure und Tetradecandisäure ausgewählt sind und wobei das aliphatische Diamin von (iii) Hexamethylendiamin ist.

4. Polyamidzusammensetzung nach Anspruch 1, wobei das Lactam und/oder die Aminocarbonsäure mindestens eines ist von Laurolactam, Caprolactam und 11-Aminoundecansäure.

5. Polyamidzusammensetzung nach Anspruch 1, wobei das Copolyamid in einer Menge von 80 bis 99 Gewichtsprozent vorliegt und des Weiteren 1 bis 20 Gewichtsprozent eines Weichmachers umfasst, wobei die Gewichtsprozentsätze auf dem Gesamtgewicht der Zusammensetzung basieren.

6. Polyamidzusammensetzung nach Anspruch 5, wobei der Weichmacher ein Sulfonamid ist.

7. Polyamidzusammensetzung nach Anspruch 5, wobei der Weichmacher einer oder mehrere von N-Butylbenzolsulfonamid, N-(2-Hydroxypropyl)benzolsulfonamid, N-Ethyl-o-toluolsulfonamid, N-Ethyl-p-toluolsulfonamid, o-Toluolsulfonamid und p-Toluolsulfonamid ist.

8. Polyamidzusammensetzung nach Anspruch 1, des Weiteren eines oder mehrere von thermischen, oxidativen und/oder Lichtstabilisatoren, Trennmitteln, Farbmitteln und Gleitmitteln umfassend.

9. Polyamidzusammensetzung nach Anspruch 1, wobei das Copolyamid mindestens 40 μäquiv./g Aminenden aufweist.

10. Polyamidzusammensetzung nach Anspruch 1, wobei das Copolyamid mindestens 50 μäquiv./g Aminenden aufweist.

11. Polyamidzusammensetzung nach Anspruch 1, wobei das Copolyamid mindestens 60 μäquiv./g Aminenden aufweist.

12. Polyamidzusammensetzung nach Anspruch 1, wobei das Copolyamid einen Schmelzpunkt von weniger als oder gleich etwa 230 °C aufweist.

13. Polyamidzusammensetzung nach Anspruch 1, wobei das Copolyamid einen Schmelzpunkt von weniger als oder gleich etwa 220 °C aufweist.

14. Artikel umfassend die Polyamidzusammensetzung nach Anspruch 1.

**Revendications**

1. Composition de polyamide comprenant un copolyamide comprenant:

(a) des motifs de répétition dérivés de monomères sélectionnés parmi un ou plusieurs monomère(s) du groupe constitué de:

(i) au moins un acide dicarboxylique aromatique ayant 8 à 20 atomes de carbone et/ou au moins un acide dicarboxylique alicyclique ayant 8 à 20 atomes de carbone et au moins une diamine aliphatique ayant 4 à 20 atomes de carbone, et
(ii) au moins une diamine aromatique ayant 6 à 20 atomes de carbone et/ou au moins une diamine alicyclique ayant 6 à 20 atomes de carbone et au moins un acide dicarboxylique aliphatique ayant 4 à 20 atomes de carbone, et

(b) des motifs de répétition dérivés de monomères sélectionnés parmi un ou plusieurs monomère(s) du groupe constitué de:

(iii) au moins un acide dicarboxylique aliphatique ayant 6 à 36 atomes de carbone et au moins une diamine aliphatique ayant 4 à 20 atomes de carbone, et
(iv) au moins un lactame et/ou un acide aminocarboxylique ayant 4 à 20 atomes de carbone;

dans laquelle le copolyamide a un point de fusion qui est inférieur ou égal à environ 240°C, au moins 30 µéq./g d'extrémités amines, et un indice logarithmique de viscosité d'au moins environ 1,2 tel que mesuré en *m*-crésol.

2. Composition de polyamide selon la revendication 1 dans laquelle les motifs de répétition (b) sont dérivés de l'acide décanedioïque et/ou de l'acide dodécanedioïque, et de l'hexaméthylènediamine.

3. Composition de polyamide selon la revendication 1, dans laquelle les acides dicarboxyliques aliphatiques des monomères (iii) sont sélectionnés parmi l'un ou plusieurs parmi l'acide nonanedioïque, l'acide décanedioïque, l'acide undécanedioïque, l'acide dodécanedioïque, l'acide tridécanedioïque, et l'acide tétradécanedioïque, et dans laquelle la diamine aliphatique de (iii) est l'hexaméthylènediamine.

4. Composition de polyamide selon la revendication 1 dans laquelle le lactame et/ou l'acide aminocarboxylique est au moins l'un parmi le laurolactame, le caprolactame, et l'acide 11-aminoundécanoïque.

5. Composition de polyamide selon la revendication 1 dans laquelle le copolyamide est présent en 80 à 99 pour cent en poids et comprenant en outre 1 à 20 pour cent en poids d'un agent plastifiant, dans laquelle les pourcentages en poids sont basés sur le poids total de la composition.

6. Composition de polyamide selon la revendication 5 dans laquelle l'agent plastifiant est un sulfonamide.

7. Composition de polyamide selon la revendication 5 dans laquelle l'agent plastifiant est l'un ou plusieurs parmi le *N*-butylbenzènesulfonamide, le *N*-(2-hydroxypropyl)benzènesulfonamide, le *N*-éthyl-*o*-toluènesulfonamide, le *N*-éthyl-*p*-toluènesulfonamide, le *o*-toluènesulfonamide, et le *p*-toluènesulfonamide.

8. Composition de polyamide selon la revendication 1 comprenant en outre un ou plusieurs parmi les stabilisants thermiques, oxydants et/ou de la lumière; les agents de démoulage; les colorants; et les lubrifiants.

9. Composition de polyamide selon la revendication 1, dans laquelle le copolyamide a au moins 40 µéq./g d'extrémités amines.

10. Composition de polyamide selon la revendication 1, dans laquelle le copolyamide a au moins 50 µéq./g d'extrémités amines.

11. Composition de polyamide selon la revendication 1, dans laquelle le copolyamide a au moins 60 µéq./g d'extrémités amines.

12. Composition de polyamide selon la revendication 1, dans laquelle le copolyamide a un point de fusion inférieur ou égal à environ 230°C.

13. Composition de polyamide selon la revendication 1, dans laquelle le copolyamide a un point de fusion inférieur ou égal à environ 220°C.

**14.** Article comprenant la composition de polyamide selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4603166 A

### Non-patent literature cited in the description

- Nylon Plastics Handbook. Hanser, 1995, 79
- **WALTZ, J.E. ; TAYLOR, G.B.** *Anal. Chem.,* 1947, vol. 19, 448-50
- Nylon Plastics Handbook. Hanser, 1995, 13-32